# EUROPÄISCHE PATENTANMELDUNG

(11) **EP 4 819 534 A1**
(43) Veröffentlichungstag der Anmeldung: **07.10.2026**
(21) Anmeldenummer: 25168085.6
(22) Anmeldetag: 02.04.2025
(51) Int. Cl.: H04L 9/08

(54) **VERFAHREN ZUM ANWENDEN VON MINDESTENS EINER KRYPTOGRAPHISCHEN OPERATION AUF ZUMINDEST EINEN AUF EINEM GERÄT GESPEICHERTEN DATENSATZ**

(71) Anmelder: Siemens Aktiengesellschaft, 80333 München (DE)
(72) Erfinder: Zwanzger, Johannes, 85579 Neubiberg (DE)
(74) Vertreter: Siemens Patent Attorneys

(57) **Zusammenfassung**

Die Erfindung betrifft ein Verfahren zum Anwenden von mindestens einer kryptographischen Operation auf zumindest einen auf einer Vorrichtung gespeicherten Datensatz, wobei ein für die mindestens eine kryptographische Operation (f_MAC) benötigter zweite Schlüssel (K_H) von einem ersten Schlüssel (K), welcher in einem Schlüsselspeicher (S) des Geräts abgelegt ist, mit Hilfe einer vom Schlüsselspeicher berechneten Schlüsselableitungsfunktion abgeleitet wird, wobei in die Berechnung der Schlüsselableitungsfunktion ein Schlüsselableitungsparameter (H) eingeht, welchen der Schlüsselspeicher oder die Vorrichtung (G) erzeugt oder eine außerhalb der Vorrichtung befindliche, den Schlüsselableitungsparameter erzeugende Stelle bereitgestellt, dadurch gekennzeichnet, dass der Schlüsselableitungsparameter aus einem kryptographischen Hash mit einer vorgebbaren Länge aus den Daten (D) des gespeicherten Datensatzes ermittelt wird. Eine Weiterbildung der Erfindung sieht vor, dass der kryptographische Hash aus den Daten zumindest eines mittels eines dritten Schlüssels kryptographisch geschützten, gespeicherten Datensatzes ermittelt wird.

## Beschreibung

Moderne Datenverarbeitungsanlagen benötigen für kryptographische Operationen (Kryptooperationen) wie Verschlüsselung bzw. Entschlüsselung von Daten und/oder bei einem asymmetrischen Kryptoverfahren eine Signaturberechnung und/oder bei einem symmetrischen Kryptoverfahren eine MAC-Berechnung/Verifikation (MAC = Message Authentication Code). Es gibt Vertrauensanker (Trust Anchor oder Trust Point), die die Basis für den Schutz von Geräten, z.B. IOT-Geräte oder Feldgeräte bzw. Datenverarbeitungsanlagen wie beispielsweise Embedded Systemen oder Steuerrechnern bilden. Mittels eines Trust Anchors kann das Vertrauen in das unkompromittierte Funktionieren der Datenverarbeitungsanlage beim Systemstart und/oder während des laufenden Betriebs gewährleistet werden. Die Bezeichnung "Anchor" (deutsch: Anker) rührt daher, dass Sicherheits- oder Vertrauensstellungskonzepte der Datenverarbeitungsanlage den Trust Anchor als Basis nutzen und dabei vorausgesetzt wird bzw. werden muss, dass der Trust Anchor selbst sicher und unkompromittiert ist.

Ein bekannter Trust Anchor ist beispielsweise das durch ISO/IEC 11889 im Jahre 2009 spezifizierte Trusted Platform Module (TPM), das in jedem modernen PC vorhanden ist und von modernen Betriebssystemen für bestimmte kryptographische Operationen zwingend vorausgesetzt wird. Beispielsweise fußt die Festplattenverschlüsselung "BitLocker" des weitverbreiteten Betriebssystems "Windows" auf einem TPM. Es sind jedoch vielfältige andere Realisierungen eines Trust Anchors denkbar, beispielsweise ein Kryptocontroller, ein Authentisierungsbaustein oder ein in eine CPU integriertes Sicherheitselement (Secure Element).

Von gespeicherten Schlüsseln können weitere Schlüssel abgeleitet werden, z.B. mittels einer Schlüsselableitungsfunktion (Key Derivation Function, KDF). Die Ableitung von Schlüsseln basiert auf statischen Eigenschaften. Beispielsweise erfolgt eine Schlüsselableitung in Abhängigkeit einer Software-Binärdatei, festen Labels in einem Dateisystem, oder hartcodierten Ableitungswerten in einer Firmware.

Oft werden Schlüssel, die für die Ausführung von kryptographischen Operationen auf einer Vorrichtung, vorzugsweise einem Gerät bzw. Hardwaremodul, benötigt. Diese Schlüssel können von einem Masterschlüssel abgeleitet werden. Damit der Masterschlüssel nicht ungeschützt in einem Dateisystem von der Vorrichtung zu liegen kommt, empfiehlt sich der Einsatz eines sicheren Schlüsselspeichers, in der Masterschlüssel (Masterkey) hinterlegt wird. Wird der Masterschlüssel allerdings direkt aus dem Schlüsselspeicher an eine auf der Vorrichtung laufenden Anwendung herausgegeben, besteht die Gefahr, dass er von einem Angreifer, der in diesem Moment Zugriff (nicht notwendigerweise physikalischer Art) auf die Vorrichtung hat, abgefangen wird. In diesem Fall muss alles, was von diesem Schlüssel geschützt wurde, sowohl hinsichtlich Vertraulichkeit als auch hinsichtlich Integrität (im Falle der Integrität bedeutet es, dass keiner vom betreffenden Schlüssel ausgestellten Integritätsbescheinigung mehr getraut werden kann) als kompromittiert betrachtet werden.

Daher ist es sinnvoll, wenn vom Schlüsselspeicher S nicht K selbst, sondern nur aus dem Masterkey K abgeleitete Schlüssel K'1, K'2, ..., K'n herausgegeben werden. Das Abfangen eines Schlüssels K'i kompromittiert dann nur die mit dem Schlüssel K'i geschützten Daten. Dieses erste Problem wird jedoch nur überwunden, wenn die Anzahl der Schlüssel K'1, K'2, ..., K'n hinreichend groß ist, damit eine vollständige Kompromittierung der n Schlüssel für einen Angreifer zu aufwändig ist. Es wird davon ausgegangen, dass der Angreifer nicht dauerhaft, sondern nur temporär Zugriff (physikalischer oder nicht physikalischer Natur) auf die Vorrichtung hat.

Ein weiteres zweite Problem besteht darin, dass es, insbesondere im Falle des Integritätsschutzes, für den Angreifer ausreichend sein kann, nur einen einzigen Schlüssel K'i abzufangen und damit manipulierte Daten mit einer vermeintlich verlässlichen Integritätsinformation zu versehen.

Aus US11483146B2 ist Verfahren bekannt, um einen zweiten Schlüssel auf Basis eines von einem Benutzer bereitgestellten Passworts abzuleiten und damit einen ersten Schlüssel zu schützen. Das Verfahren benötigt eine aktive Interaktion mit einem Benutzer, um den ersten Schlüssel zu schützen.

Aus EP37200039B1 ist ein Verfahren zum Konfigurieren eines Sicherheitsmoduls bekannt. Hierbei geht in die Ableitung ein zur Laufzeit dynamisch bestimmter, veränderbarer digitaler Fingerabdruck als Schlüsselableitungsparameter eingeht, welcher abhängig von einer gemessenen aktuellen Laufzeitkonfiguration einer mit dem Sicherheitsmodul kommunizierenden Laufzeitumgebung gebildet wird. Hierbei ist eine Laufzeitumgebung notwendig, die beispielsweise durch eine CPU bzw. Recheneinrichtung gebildet wird, welche das Sicherheitsmodul anspricht bzw. steuert bzw. mit ihr kommuniziert.

Es ist Aufgabe der vorliegenden Erfindung, ein Verfahren für die Handhabung von Schlüsseln anzugeben, welches gegenüber dem eingangs Genannten einen verbesserten Schutz gegen Angreifer aufweist.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Ein Aspekt der Erfindung ist ein computer-implementiertes Verfahren zum Anwenden von mindestens einer (ersten) kryptographischen Operation auf zumindest einen auf einer Vorrichtung gespeicherten Datensatz, wobei ein für die mindestens eine (erste) kryptographische Operation benötigter zweite Schlüssel von einem ersten Schlüssel, welcher in einem Schlüsselspeicher des Geräts abgelegt ist, mit Hilfe einer vom Schlüsselspeicher berechneten Schlüsselableitungsfunktion abgeleitet wird, wobei in die Berechnung der Schlüsselableitungsfunktion ein Schlüsselableitungsparameter eingeht, welchen der Schlüsselspeicher oder die Vorrichtung erzeugt oder eine außerhalb der Vorrichtung befindliche, den Schlüsselableitungsparameter erzeugende Stelle bereitgestellt, dadurch gekennzeichnet, dass der Schlüsselableitungsparameter aus einem kryptographischen Hash mit einer vorgebbaren Länge aus den Daten des gespeicherten Datensatzes ermittelt wird.

Der oben genannte Schritt des Ableitens eines weiteren Schlüssels kann (iterativ) ein- oder mehrfach wiederholt werden. Zumindest eine kryptographische Operation kann mit Hilfe des abgeleiteten weiteren Schlüssels durchgeführt werden. Die erste kryptographische Operation kann ein Verschlüsseln und/oder eine Signatur sein.

Vorzugsweise wird eine Einwegfunktion für die Schlüsselableitung verwendet. Eine Einwegfunktion ist eine Funktion, bei der aus dem abgeleiteten Schlüssel nur mit sehr hohem Aufwand (bzgl. Rechenleistung und Speicher) auf den zugrundeliegenden Schlüssel geschlossen werden kann.

Eine Weiterbildung der Erfindung sieht vor, dass der zumindest eine Datensatz durch Anwendung der kryptographischen Operation geschützt wird und der zumindest eine geschützte Datensatz in der Vorrichtung abgelegt wird.

Eine Weiterbildung der Erfindung sieht vor, dass eine zweite kryptographische Operation auf den zumindest einen geschützten Datensatz unter Nutzung des zweiten Schlüssels angewendet wird. Die zweite kryptographische Operation kann ein Entschlüsseln und/oder eine Verifikation einer Signatur sein.

Der Vorteil der Erfindung besteht darin, dass der abgeleitete Schlüssel datenabhängig ist. Jede Veränderung der Daten durch einen Angreifer macht einen durch den Angreifer beobachteten abgeleiteten Schlüssel nutzlos.

Eine Weiterbildung der Erfindung sieht vor, dass der kryptographische Hash aus den Daten zumindest eines mittels eines dritten Schlüssels kryptographisch geschützten, gespeicherten Datensatzes ermittelt wird.

Mit einem beobachteten Schlüssel kann ein Angreifer hiermit keine selbstgewählten Daten verschlüsseln oder eine Signatur oder einen MAC über selbstgewählte Daten berechnen.

Eine Weiterbildung der Erfindung sieht vor, dass der dritte Schlüssel mit Hilfe der kryptographischen Operation unter Nutzung des abgeleiteten zweiten Schlüssels zusammen mit dem zumindest einen kryptographisch geschützten Datensatzes im Gerät geschützt abgelegt/gespeichert wird.

Eine Weiterbildung der Erfindung sieht vor, dass eine weitere kryptographische Operation auf den geschützten Datensatz unter Nutzung des mit dem zweiten Schlüssel entschlüsselten dritten Schlüssels angewendet wird.

Ein weiterer Aspekt der Erfindung ist eine Vorrichtung zum Anwenden von mindestens einer kryptographischen Operation auf zumindest einen auf dem Gerät gespeicherten Datensatz, aufweisend einen Schlüsselspeicher, in welchem ein erster Schlüssel gespeichert ist, und aufweisend eine Ableitungseinheit, welche dazu ausgelegt ist, einen für die mindestens eine kryptographische Operation benötigten zweiten Schlüssel von dem ersten Schlüssel mit Hilfe einer vom Schlüsselspeicher berechneten Schlüsselableitungsfunktion abzuleiten, wobei in die Berechnung der Schlüsselableitungsfunktion ein Schlüsselableitungsparameter eingeht, welchen der Schlüsselspeicher oder die Vorrichtung erzeugen oder eine außerhalb der Vorrichtung befindliche, den Schlüsselableitungsparameter erzeugende Stelle bereitstellen kann, dadurch gekennzeichnet, dass der Schlüsselableitungsparameter aus einem kryptographischen Hash mit einer vorgebbaren Länge aus den Daten des gespeicherten Datensatzes ermittelbar und/oder ermittelt ist.

Das Computerprogrammprodukt umfassend computerausführbare Anweisungen, welche, wenn in ein Gerät (z.B. Computer) geladen, zur Durchführung eines Verfahrens nach der oben genannten Art und Ausführungsformen ausgelegt sind.

Des Weiteren ist ein Computerprogramm(produkt) umfassend Programm-Code vorgesehen, der von mindestens einem Prozessor ausgeführt werden kann und der bewirkt, dass der mindestens eine Prozessor das erfindungsgemäße (Betriebs-)Verfahren und dessen Ausführungsformen ausführt. Das Computerprogramm kann auf einem Gerät/Modul bzw. Vorrichtung der vorstehend genannten Art ablaufen oder als Computerprogrammprodukt auf einem computerlesbaren Medium gespeichert sein.

Die Vorrichtungen, Einrichtungen bzw. Geräte, Module und Computerprogramm(produkte) können entsprechend der Weiterbildungen/Ausführungsformen des vorgenannten Verfahrens und deren Weiterbildungen/Ausführungsformen und umgekehrt ausgebildet sein.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigt in schematischer Darstellung. Die Zahlen in Kreisen deuten Verfahrensschritte an.

Die Figur 1 zeigt in schematischer Darstellung einer Vorrichtung bzw. ein Gerät G. Es sei darauf hingewiesen, dass die Erläuterung der Erfindung im Zusammenhang mit dem Gerät rein beispielhaft und ohne Beschränkung der vorliegenden Erfindung auf ein derartiges Gerät erfolgt.

Die Figur 2 zeigt eine Erweiterung von dem zur Figur 1 erläuterten Vorgehen.

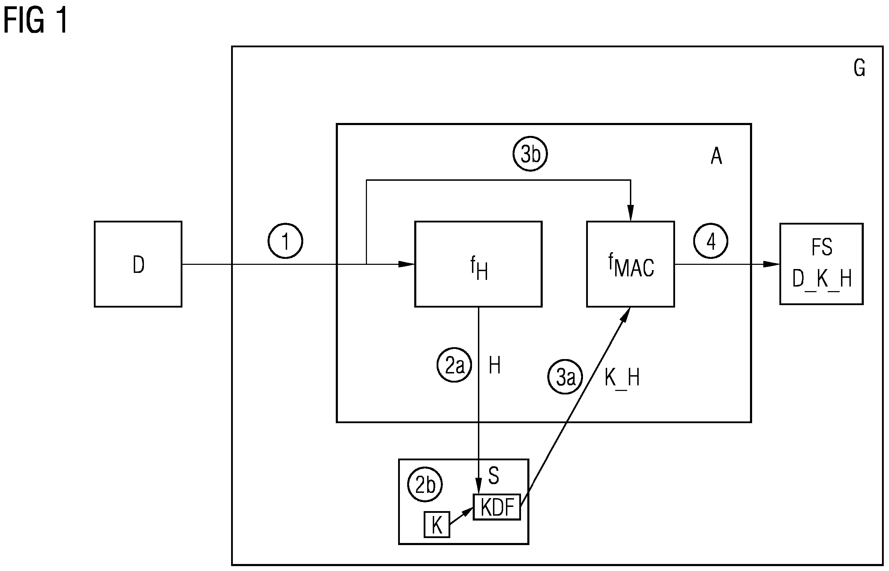

In der Figur 1 wird ein Gerät G gezeigt. Die Funktionalität wird durch eine Key Derivation Function (Schlüsselableitungsfunktion, abgekürzt mit KDF) realisiert, welche in einem in das Gerät G integrierten oder mit dem Gerät G verbundenen (drahtgebunden oder drahtlos) Schlüsselspeicher S integriert und in Figur 1 als Ableitungseinheit, welche die Funktionalität ausführen kann, mit der Bezeichnung KDF dargestellt ist. Die Funktionalität kann auch verteilt realisiert sein, d.h. ein erster Teil der Key Derivation Function kann im integrierten Schlüsselspeicher implementiert sein, ein zweiter Teil der Key Derivation Function kann im verbundenen Schlüsselspeicher realisiert sein.

Schlüsselableitungsfunktionen können prinzipiell entweder in Software- oder Hardwarekomponenten realisiert werden. Ein zur Ableitung verwendete Masterschlüssel K kann dabei entweder in Hardware gespeichert werden (z.B. Hardware-based Trust Anchor), oder in Software (z.B. als Teil einer obfuskierten Routine) implementiert sein.

Die Applikationen, wobei eine Applikation in der Figur 1 beispielsweise mit A gekennzeichnet ist, können eine kryptographische Operation (im Beispiel Signatur-/MAC-Berechnung) mit Hilfe des abgeleiteten Schlüssels durchzuführen/berechnen. Solche kryptographischen Operationen können sicherheitskritische Objekte, beispielsweise verschlüsselte Daten D von Datensätzen in einem Dateisystem FS oder Dateisysteme, deren Hardware, auf den sie liegen, verschlüsselt ist, oder private Schlüssel für eine TLS-Verbindung schützen und darauf zugreifen.

Es ist aber auch möglich, dass eine der beiden kryptographische Operationen extern berechnet wird; in diesen Fällen muss der Masterschlüssel K extern bekannt sein und der Abruf eines von K abgeleiteten Schlüssels vom Schlüsselspeicher S muss bei der extern durchgeführten Operation durch entsprechende Berechnungen auf der externen Seite ersetzt werden. Ver- und Entschlüsselungsoperationen dürften in der Regel symmetrischer Art sein, es ist aber der Einsatz des Verfahrens auch für asymmetrische Operationen (ggf. können die abgeleiteten Schlüssel hier nicht unmittelbar genutzt werden, sondern müssen zusätzliche Schritte durchlaufen) möglich.

Für jeden zu schützenden Datensatz wird durch die Applikation A auf dem Gerät G im Rahmen der ersten kryptographischen Operation (z.B. Signatur-/MAC-Berechnung) beispielsweise folgendes Verfahren durchgeführt:
- In Schritt 1 errechnet die Anwendung A einen Schlüsselableitungsparameter einer vorgebbaren Länge (normalerweise fixe Länge z.B. 128 Bit), im Beispiel einen kryptographischen Hash(wert) H aus den Daten D, welche in eine Hashfunktion f_H zur Berechnung des Hash H eingebracht werden.
- In Schritt 2a wird der Hash H an den Schlüsselspeicher S gesendet und zusammen mit dem Schlüssel K (Schritt 2b) an die Einheit KDF übergeben.
- In Schritt 3a leitet die Ableitungseinheit KDF daraus den Schlüssel K_H ab, welcher zusammen mit den Daten D (Schritt 3b) in die kryptographische Operation f_MAC in der Anwendung A eingeht. Die Operation f_MAC berechnet in Schritt 4 daraus die mit einem MAC geschützten Daten D_K_H, welche im Dateisystem FS abgelegt werden. D.h. die Anwendung A schützt den Datensatz D mittels der ersten kryptographische Operation unter Nutzung von K_H, indem Verifikationsdaten (z.B. MAC) an D angehängt werden.

Für jeden geschützten Datensatz D_K_H wird durch die Applikation A auf dem Gerät G im Rahmen einer zweiten kryptographischen Operation (z.B. Signatur-/MAC-Verifikation) folgendes Verfahren durchgeführt:
- Die Anwendung A errechnet einen kryptographischen Hash H aus den Daten D (die Teil von D_K_H sind) mit einer vorgebbaren Länge (z.B. 128 Bit).
- Die Anwendung A sendet den Hashwert H an den Schlüsselspeicher S.
- Der Schlüsselspeicher leitet mit Hilfe der Ableitungseinheit KDF aus dem Masterschlüssel K und dem Hash H den Schlüssel K_H ab und schickt ihn zurück an die Anwendung A.
- Die Anwendung A wendet die zweite Kryptographische Operation auf den geschützten Datensatz D_K_H unter Nutzung von K_H an.

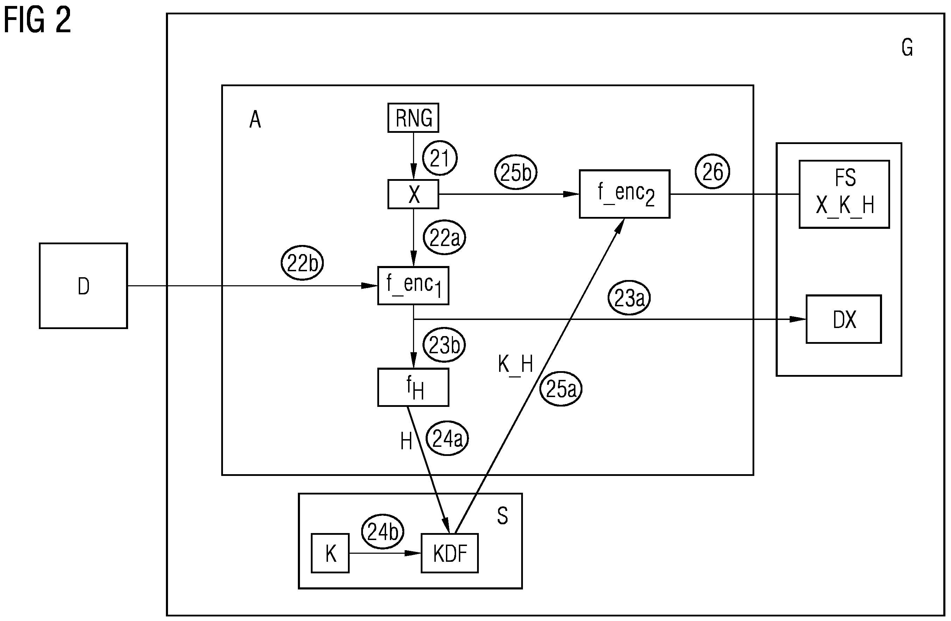

Die Figur 2 zeigt eine Erweiterung von dem zur Figur 1 erläuterten Vorgehen. Die Bezugszeichen der Figur 1 sind zum Großteil auch in Figur 2 zu finden.

Für jeden zu schützenden Datensatz wird durch die Applikation A auf dem Gerät G im Rahmen der ersten kryptographischen Operation (im Beispiel Verschlüsselung) beispielsweise folgendes Verfahren durchgeführt:
- In Schritt 21 erzeugt ein Zufallszahlengenerator RNG in der Anwendung A auf dem Gerät G den Zufallswert X (RNG kann auch außerhalb von der Anwendung A liegen, z.B. als Hardwaremodul)
- In Schritt 22a und 22b gehen der Zufallswert X und die Daten D in eine Verschlüsselungsfunktion f_enc1 ein.
- Die Verschlüsselungsfunktion f_enc1 berechnet daraus den geschützten (=verschlüsselten) Datensatz D_X und speichert diesen in Schritt 23a ins Dateisystem FS und schickt ihn in Schritt 23b an eine Schlüsselableitungsfunktion, im Beispiel eine Hashfunktion f_H.
- In Schritt 24a berechnet f_H aus D_X einen Hash(wert) H, welcher zusammen mit dem Schlüssel K (Schritt 24b) in die Ableitungseinheit eingeht.
- In Schritt 25a leitet die Ableitungseinheit mittels des Schlüsselableitungsparameters H den Schlüssel K_H ab, der zusammen mit X (Schritt 25b) in eine weitere Verschlüsselungsfunktion f_enc2 eingeht (kann gegebenenfalls identisch zu f_enc1 sein).
- In Schritt 26 berechnet f_enc2 daraus den geschützten (=verschlüsselten) Schlüssel X_K_H, welcher im Dateisystem FS abgelegt wird.

Für jeden geschützten Datensatz **D_X** zusammen mit dem geschützten Schlüssel **X_K_H** wird durch die Applikation **A** auf dem Gerät **G** im Rahmen der zweiten kryptographischen Operation (Entschlüsseln) folgendes Verfahren durchgeführt:
- Die Anwendung A errechnet einen kryptographischen Hash H aus den Daten des Datensatzes D_X mit einer vorgebbaren Länge (z.B. 128 Bit).
- Die Anwendung A sendet den Hashwert H an den Schlüsselspeicher S.
- Der Schlüsselspeicher S leitet mit Hilfe einer geeigneten Key-Derivation-Function der Ableitungseinheit KDF aus dem Masterschlüssel K und dem Hash H den Schlüssel K_H ab und sendet diesen zurück an die Anwendung A.
- Anwendung A entschlüsselt den Schlüssel X aus dem geschützten Schlüssel X_K_H mit einer geeigneten Entschlüsselungsfunktion (die Inverse zu der oben genannten genutzten Verschlüsselungsfunktion f_enc2) unter Nutzung von K_H.
- Die Anwendung A wendet die Inverse der genannten Verschlüsselungsfunktion f_enc1 auf den geschützten Datensatz D_X unter Nutzung von X an und entschlüsselt damit die Daten D.

Der Vorteil dieses Vorgehen besteht darin, dass bei unterschiedlichen Daten D und D' sich auch ein unterschiedlicher Schlüssel K_H und K_H' ergibt. Damit kann ein Angreifer bei Abfangen eines durch den Schlüsselspeicher abgeleiteten Schlüssels K_H keine der genannten Kryptooperationen (MAC/Signatur/Ver-/Entschlüsselung) erfolgreich auf andere oder selbstgewählte Daten anwenden.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Die Implementierung der vorstehend beschriebenen Prozesse oder Verfahrensabläufe kann anhand von Instruktionen erfolgen, die auf computerlesbaren Speichermedien oder in flüchtigen Computerspeichern (im Folgenden zusammenfassend als computerlesbare Speicher bezeichnet) vorliegen. Computerlesbare Speicher sind beispielsweise flüchtige Speicher wie Caches, Puffer oder RAM sowie nichtflüchtige Speicher wie Wechseldatenträger, Festplatten, usw.

Die vorstehend beschriebenen Funktionen oder Schritte können dabei in Form zumindest eines Instruktionssatzes in/auf einem computerlesbaren Speicher vorliegen. Die Funktionen oder Schritte sind dabei nicht an einen bestimmten Instruktionssatz oder an eine bestimmte Form von Instruktionssätzen oder an ein bestimmtes Speichermedium oder an einen bestimmten Prozessor oder an bestimmte Ausführungsschemata gebunden und können durch Software, Firmware, Microcode, Hardware, Prozessoren, integrierte Schaltungen usw. im Alleinbetrieb oder in beliebiger Kombination ausgeführt werden. Dabei können verschiedenste Verarbeitungsstrategien zum Einsatz kommen, beispielsweise serielle Verarbeitung durch einen einzelnen Prozessor oder Multiprocessing oder Multitasking oder Parallelverarbeitung usw.

Die Instruktionen können in lokalen Speichern abgelegt sein, es ist aber auch möglich, die Instruktionen auf einem entfernten System abzulegen und darauf via Netzwerk zuzugreifen.

Das Gerät D kann ein oder mehrere Prozessoren aufweisen. Der Begriff "Prozessor", "zentrale Signalverarbeitung", "Steuereinheit" oder "Datenauswertemittel", umfasst Verarbeitungsmittel im weitesten Sinne, also beispielsweise Server, Universalprozessoren, Grafikprozessoren, digitale Signalprozessoren, anwendungsspezifische integrierte Schaltungen (ASICs), programmierbare Logikschaltungen wie FPGAs, diskrete analoge oder digitale Schaltungen und beliebige Kombinationen davon, einschließlich aller anderen dem Fachmann bekannten oder in Zukunft entwickelten Verarbeitungsmittel. Prozessoren können dabei aus einer oder mehreren Vorrichtungen bzw. Einrichtungen bzw. Einheiten bestehen. Besteht ein Prozessor aus mehreren Vorrichtungen, können diese zur parallelen oder sequentiellen Verarbeitung bzw. Ausführung von Instruktionen ausgelegt bzw. konfiguriert sein.

## Patentansprüche

1. Computer-implementiertes Verfahren zum Anwenden von mindestens einer kryptographischen Operation auf zumindest einen auf einer Vorrichtung gespeicherten Datensatz, wobei ein für die mindestens eine kryptographische Operation (f_MAC) benötigter zweite Schlüssel (K_H) von einem ersten Schlüssel (K), welcher in einem Schlüsselspeicher (S) des Geräts abgelegt ist, mit Hilfe einer vom Schlüsselspeicher berechneten Schlüsselableitungsfunktion abgeleitet wird, wobei in die Berechnung der Schlüsselableitungsfunktion ein Schlüsselableitungsparameter (H) eingeht, welchen der Schlüsselspeicher oder die Vorrichtung (G) erzeugt oder eine außerhalb der Vorrichtung befindliche, den Schlüsselableitungsparameter erzeugende Stelle bereitgestellt, **dadurch gekennzeichnet, dass** der Schlüsselableitungsparameter aus einem kryptographischen Hash mit einer vorgebbaren Länge aus den Daten (D) des gespeicherten Datensatzes ermittelt wird.

2. Verfahren nach dem vorhergehenden Anspruch, **dadurch gekennzeichnet, dass** der zumindest eine Datensatz durch Anwendung der kryptographischen Operation geschützt wird und der zumindest eine geschützte Datensatz in der Vorrichtung abgelegt wird.

3. Verfahren nach dem vorhergehenden Anspruch, **dadurch gekennzeichnet, dass** eine zweite kryptographische Operation auf den zumindest einen geschützten Datensatz unter Nutzung des zweiten Schlüssels angewendet wird.

4. Verfahren nach dem vorhergehenden Anspruch 1, **dadurch gekennzeichnet, dass** der kryptographische Hash aus den Daten zumindest eines mittels eines dritten Schlüssels (X) kryptographisch geschützten, gespeicherten Datensatzes ermittelt wird.

5. Verfahren nach dem vorhergehenden Anspruch, **dadurch gekennzeichnet, dass** der dritte Schlüssel mit Hilfe der kryptographischen Operation unter Nutzung des abgeleiteten zweiten Schlüssels (K_H) zusammen mit dem zumindest einen kryptographisch geschützten Datensatzes im Gerät geschützt (X_K_H) abgelegt wird.

6. Verfahren nach dem vorhergehenden Anspruch, **dadurch gekennzeichnet, dass** eine weitere kryptographische Operation auf den geschützten Datensatz unter Nutzung des mit dem zweiten Schlüssel entschlüsselten dritten Schlüssels angewendet wird.

7. Vorrichtung (G) zum Anwenden von mindestens einer kryptographischen Operation (f_MAC) auf zumindest einen auf dem Gerät gespeicherten Datensatz, aufweisend einen Schlüsselspeicher (S), in welchem ein erster Schlüssel gespeichert ist, und aufweisend eine Ableitungseinheit (KDF), welche dazu ausgelegt ist, einen für die mindestens eine kryptographische Operation benötigten zweiten Schlüssel (K_H) von dem ersten Schlüssel (K) mit Hilfe einer vom Schlüsselspeicher berechneten Schlüsselableitungsfunktion abzuleiten, wobei in die Berechnung der Schlüsselableitungsfunktion ein Schlüsselableitungsparameter eingeht, welchen der Schlüsselspeicher oder die Vorrichtung erzeugen oder eine außerhalb der Vorrichtung befindliche, den Schlüsselableitungsparameter erzeugende Stelle bereitstellen kann, **dadurch gekennzeichnet, dass** der Schlüsselableitungsparameter aus einem kryptographischen Hash mit einer vorgebbaren Länge aus den Daten des gespeicherten Datensatzes ermittelbar und/oder ermittelt ist.

8. Vorrichtung nach dem vorhergehenden Anspruch, **dadurch gekennzeichnet, dass** der zumindest eine Datensatz durch Anwendung der kryptographischen Operation geschützt und der zumindest eine geschützte Datensatz in der Vorrichtung abgelegt werden kann.

9. Vorrichtung nach dem vorhergehenden Anspruch, **dadurch gekennzeichnet, dass** eine zweite kryptographische Operation auf den zumindest einen geschützten Datensatz unter Nutzung des zweiten Schlüssels angewendet werden kann.

10. Computerprogrammprodukt umfassend computerausführbare Anweisungen, welche, wenn geladen in ein die Anweisungen verarbeitbaren Gerät, zur Durchführung eines Verfahrens nach einem der vorhergehenden Verfahrensansprüche ausgelegt sind.
